# EUROPEAN PATENT APPLICATION

(11) **EP 4 413 895 A1**
(43) Date of publication of application: **14.08.2024**
(21) Application number: 24156259.4
(22) Date of filing: 07.02.2024
(51) Int. Cl.: A43B 13/02, A43B 13/18, B29D 35/12

(54) **CO-MOLDED MIDSOLES**

(30) Priority: 07.02.2023 US 202363443935 P
(71) Applicant: Allbirds, Inc., San Francisco, CA 94111 (US)
(72) Inventor: JESSIMAN, Alec, San Francisco, 94111 (US); PATEL, Romesh, San Francisco, 94111 (US); HENRICHOT, Olivier, San Francisco, 94111 (US); FINCK, Thomas Jad, San Francisco, 94111 (US)
(74) Representative: Rooney, John-Paul

(57) **Abstract**

A sole of a shoe with a plate co-molded with a foam structure is disclosed. The sole includes a plate and a foam body. The foam body defines a bottom surface, a top surface, a cavity, and a depression. The first end of the cavity is defined by the bottom surface and the second end of the cavity is defined by the plate. The first end of the depression is defined by the top surface and the second end of the depression is defined by the plate. The plate is made from a first material and the foam body is made from a second material, such as bio-based materials.

## Description

### TECHNICAL FIELD

Midsoles for footwear. In particular, embodiments described herein relate to a co-molded midsole for a shoe, where a foam body of the midsole is molded around a support plate.

### BACKGROUND

Shoes protect a wearer's feet from injury and disease, provide comfort and support, and are an important staple of fashion. Shoes may have a wide variety of designs depending on the intended activity of the wearer. In particular, the sole of a shoe may be designed with a certain stiffness, cushioning, and other mechanical properties that makes it easier for a wearer to perform a range of activities.

However, traditional manufacturing methods used to add stiffness to midsoles add to the manufacturing complexity of the shoe, increase costs, and harm the environment. In traditional midsoles, adding stiffness and achieving other mechanical properties may decrease the available cushioning and the level of comfort for a wearer. Moreover, stiffening elements in midsoles are often made from non-renewable, non-recyclable materials, adding to the waste from the fashion industry.

### SUMMARY

A shoe midsole includes a plate and a foam body. The foam body defines a bottom surface, a top surface that is opposite the bottom surface, a cavity, and a depression. The bottom surface defines a first end of the cavity, and the plate defines a second end of the cavity. Similarly, the top surface defines a first end of the depression, and the plate may define a second end of the depression. In some examples, the plate is made from a first material and the foam body may be made from a second material.

In some embodiments, the plate defines a through hole. The through hole of the plate encircles a portion of the foam body between the top surface and the bottom surface. In some cases, the midsole defines a side surface between the top surface and the bottom surface. The foam body, in turn, defines a first portion of the side surface and the plate may protrude from the first portion of the side surface which defines a second portion of the side surface.

In some examples, the sole includes a second plate. In this example, the sole defines a second cavity. The bottom surface of the sole defines a first end of the second cavity and the second plate defines a second end of the second cavity.

The material of the plate, in some examples, is flax composite. The material of the foam body, in some examples, is a bio-based foam.

In some embodiments, a tread surface of the sole is defined by the bottom surface of the foam body, the cavity, and a portion of the plate exposed by the cavity.

A method for fabricating a shoe includes the following steps: A shoe plate defining an aperture is placed on a first part of a mold, where the first part of the mold defines a first flanged support configured to support a first portion of the shoe plate. The first part of the mold is aligned with a second part of the mold, where the second part of the mold defines a second flanged support configured to support a second portion of the shoe plate and the first part of the mold and the second part of the mold defines a mold cavity. The mold is closed such that the first flanged support of the first part of the mold is opposite the second flanged support of the second part of the mold, and the first flanged support and the second flanged support are configured to fix the shoe plate within the mold cavity. Next, foam is injected at the second half of the mold, the foam flows though the aperture thereby surrounding the plate and filling the aperture. The method can also include clamping, between the first part of the mold and the second part of the mold, a peripheral portion of the plate.

In some examples, the method disclosed includes removing, from a solidified sole, the peripheral portion of the plate. An outer sole is attached to the bottom surface of the solidified foam. As an example configuration, the first flanged support has a first volume and the second flanged support has a second volume smaller than the first volume.

In some examples, a shoe includes an upper, an outer sole, and a sole. The sole has a side surface and a bottom surface. Also, the sole includes a shoe plate which may define a lip. The lip, in turn, defines a first portion of the side surface, and a monolithic cushioned body at least partially enclosing the shoe plate. The monolithic cushioned body defines a second portion of the side surface and may expose, at the bottom surface, at least a portion of the shoe plate.

The cushioned body defines a cavity. The bottom surface of the cushioned body defines an opening of the cavity and the shoe plate defines a bottom of the cavity. In some embodiments, the cavity defines a portion of a tread of the shoe. In some cases, the cushioned body defines a depression, the top surface defines an opening of the depression and the shoe plate defines a bottom of the depression. The bottom of the cavity is opposite the bottom of the depression.

The shoe plate defines a hole. The hole is configured to accept a portion of the monolithic cushioned body. Some shoe plates are made from two materials. The lip of the shoe plate can be a different material from the rest of the shoe plate. In some examples, the monolithic cushioned body is made from a bio-based foam.

### BRIEF DESCRIPTION OF THE DRAWINGS

Reference will now be made to representative embodiments illustrated in the accompanying figures. It should be understood that the following descriptions are not intended to limit this disclosure to one included embodiment. To the contrary, the disclosure provided herein is intended to cover alternatives, modifications, and equivalents as may be included within the spirit and scope of the described embodiments, and as defined by the appended claims.
FIGS. 1A-1D depict an example of a midsole with a co-molded plate in a foam body structure, such as described herein.
FIGS. 2A-2B depict an example of a midsole with a co-molded plate in a cushioned body, such as described herein.
FIG. 3 depicts an example of a midsole with a co-molded plate encased in a foam body, such as described herein.
FIG. 4 depicts an example of a shoe plate, such as described herein.
FIG. 5 depicts an example of the bottom of a midsole, such as described herein.
FIG. 6A-6C depicts an example operation of a method of forming a midsole with a co-molded shoe plate, such as described herein.

The use of the same or similar reference numerals in different figures indicates similar, related, or identical items.

The use of cross-hatching or shading in the accompanying figures is generally provided to clarify the boundaries between adjacent elements and also to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

Additionally, it should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Embodiments described herein relate to shoe midsoles. Particularly, this disclosure describes co-molded midsoles for shoes where a foam body of the midsole is molded around a support plate along with methods of manufacturing these midsoles.

Athletic shoes are widely used for their comfort and their performance. These shoes tend to provide a wearer with lightweight yet stable footwear that can be used in a wide variety of activities such as walking, running, HIIT workouts, hiking, standing, and so on. For example, many athletic shoes decrease energy loss during running by providing a high level of energy storage and release. Such levels of energy storage and release may help wearers, like runners, to maintain their motion and avoid excessive impact. Similarly, many athletic shoes help stabilize a wearer's ankles by reducing the rotational force on impact, thus distributing the workload more evenly to the body. These features of athletic shoes allow wearers to engage in an activity for longer periods, to reduce injury, and to increase performance.

To aid with pressure distribution and comfort, many athletic shoes incorporate cushioned midsoles. This cushioning can be made from foam due to its lightweight properties. However, foam does not impart significant stiffness to the midsoles of the shoe for many users engaging in many different activities. As a result, some users disfavor shoes with pure foam midsoles for athletic activities.

Some midsoles include multiple components that change the shoe's properties and/or performance. For example, some midsoles include stiffeners that increase the midsole's stiffness, thereby enhancing any or all of stability, pressure distribution, energy storage and release, support, and so on. Example stiffeners include shank plates, shoe plates, coils, pressurized chambers, and so on. Some shoe plates, for example, span from the forefoot to the heel area to act as a spring (or impart some spring or rebound force) as a wearer takes a step.

However, multicomponent midsoles increase the manufacturing complexity and the costs of midsoles and of shoes. Increasing the manufacturing complexity often requires increasing the levels of quality control at each step of the manufacturing process. In turn, this results in a more expensive shoe with more material waste. Additional materials and manufacturing steps may also lead to environmental impacts (e.g., higher carbon emissions). Similarly, the cost of additional manufacturing steps and materials are passed on to the consumer. Lack of additional quality control, as a cost saving measure, results in a lower quality shoe because each additional step of manufacturing increases the possibility of human error.

From a shoe performance standpoint, most multicomponent midsoles have higher stiffness compared to soles made only from foam. However, this high level of stiffness tends to be disfavored by users. For example, when a shoe plate is adhered to and between the insole and the midsole, the shoe may not feel as cushioned due to the proximity of the shoe plate to the wearer's foot. In other examples, the shoe plate may be sandwiched between two foam portions of a single midsole. In this example, adhesives may be used to assemble the plate to each foam portion of the midsole. However, adhesive layers may change the mechanical properties of the midsole (e.g., adding undesired torsional or lateral stiffness). In addition, manufacturers require additional care to align and adhere each of the portions of the midsole-thus increasing the potential of human error during manufacturing and an imbalanced shoe.

A shoe midsole, as described herein, offers many benefits over the traditional multicomponent midsoles. For example, the methods described herein allow for simplified manufacturing of multicomponent midsoles. As a result, manufacturers can reduce the cost of producing multicomponent midsoles and reduce the environmental effects of the complex manufacturing process. The resulting multicomponent midsole has a lower carbon footprint with reduced costs. Also, the described midsole offers a stiffness that is comfortable to a user without introducing intermediate layers between the plate and the foam that increase its stiffness. Furthermore, the midsole disclosed herein retains the manufacturing advantages of midsoles formed solely from foam and provides an added stiffness that foam, on its own, does not have, as well as additional support and energy return to a user when walking or running.

To achieve such benefits, the disclosed midsole has a foam body molded around a support plate. The support plate, shoe plate, or simply plate, is co-molded with the foam to form an integrated shoe midsole. By co-molding the plate within the foam, the plate and the foam couple without the need for additional adhesives to attach these pieces.

The geometry of the shoe plate facilitates co-molding it with foam to create the integrated midsole. For example, some shoe plates have a hole or an aperture that allow foam to flow through it when foam is injected into a mold cavity, thereby permitting foam to flow from one side of the plate to the other in order to at least partially surround the plate. Similarly, the dimensions of the plate and the mold allow the foam to flow around the plate to embed the plate within the foam body.

The foam body is formed of any suitable material or combination of materials, including polyamides, polyethylene, polypropylene, polyurethane (e.g., thermoplastic polyurethane), ethyl vinyl acetate, and polyols. In some examples, the foam body is formed from a bio-based material like castor bean oil-based resins. As used herein, the term "bio-based materials" refers to materials made from substances derived at least partially from living or once-living organisms such as plants and/or trees. Additionally, some polymer composites have a matrix of bio-based and/or recycled polymers . Examples of these recycled materials include recycled synthetic polymers.

The bio-based and/or recycled materials used in the shoe midsoles described herein provide significant environmental benefits over traditional midsoles. Using bio-based materials as a substitute for synthetic materials results in fewer harmful emissions associated with the manufacturing of the shoe and reduces or eliminates processing of harmful chemicals, such as the petroleum products used to manufacture most synthetic fibers. Similarly, bio-based materials are more ecologically sustainable than many synthetic materials because they are derived from renewable resources (e.g., plant fibers, sugarcane, corn sugar) rather than nonrenewable resources (e.g., petroleum products). Using recycled materials instead of new materials reduces waste sent to landfills and incinerators, conserves natural resources, prevents pollution, and saves energy related to the collection and processing of new raw materials.

An injection process is used to form the foam body. For example, a nozzle injects a filler (which may include bio-based materials) at pressures and temperatures above ambient. The cavity of a mold receives the injected filler, which conforms to the shape of the mold cavity. The filler reacts with a physical or with a chemical blowing agent causing the material to expand, forming the foam.

To fix the shoe plate in place within a mold during the injection molding process, the shoe mold includes supporting features. For example, some shoe molds include flanged supports. The flanged supports pin the shoe plate within the mold during the injection process. Some flanged supports protrude from a top mold plate and/or bottom mold plate. The structure of the flanged supports suspends the shoe plate within a mold cavity defined by the top and bottom mold plates. In some examples, each flanged support aligns with another flanged support on the opposite part of the mold in a closed configuration.

The geometry of the shoe plate facilitates co-molding it with the foam body. For example, shoe plates described herein include a through hole. During the injection process, foam flows through the through hole and around the shoe plate to form the foam body portion of the midsole. As a result, the through hole encircles part of the finished midsole's foam body (and vice versa). A nozzle injects the foam into the cavity at the top mold plate. The foam travels from the top mold plate, through the through hole, and into the bottom mold plate, thus forming the midsole.

Depending on the geometry of the mold, once the midsole is removed from the mold, the foam body defines depressions and/or cavities. These cavities and depressions are formed as a result of the flanged supports. In some mold geometries, the resulting cavities expose portions of the shoe plate. The resulting profile of the midsole may reduce the weight of the shoe, may be aesthetically pleasing, and/or may function as part of the shoe's tread.

Other supporting features of the midsole mold may include a lip within the mold that clamps to the shoe plate. In this example, the shoe plate may be designed to protrude from the foam to form the sole. The protruding part of the shoe plate may be aesthetically pleasing and create a futuristic look for the wearer. Alternatively, part or all of the protruding portion of the shoe plate may be removed to change the contour and/or functional characteristics (e.g., mechanical properties) of the integrated midsole.

As a result of the processes described herein, the shoe plate is positioned between, or at least partially encompassed by, the midsole (and more particularly the foam forming the midsole). For example, the shoe plate is approximately in the middle of the sole to provide the wearer with sufficient cushioning while providing stiffness to the shoe for a range of activities. In addition, the plate design and injection molding process eliminates the need for additional adhesives and simplifies the manufacturing process compared to traditional multicomponent midsoles.

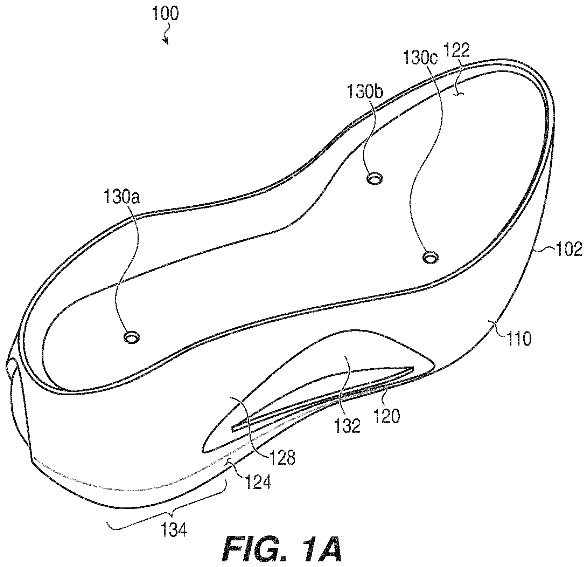

These foregoing and other embodiments are discussed below with reference to FIGs. 1A-6C. However, those skilled in the art will readily appreciate that the detailed description with respect to these figures is for explanation only and should not be construed as limiting. It should also be understood that the following description is not intended to limit the embodiments to one preferred embodiment. To the contrary, it is intended to cover alternatives, modifications, and equivalents as can be included within the spirit and scope of the described embodiments as defined by the claims.

FIGs. 1A-1D show an example of a midsole where a foam body of the midsole is molded around a support plate. In the figures, the shoe midsole 100 includes a midsole body 102. The midsole body 102, in turn, has a foam body 110 and a shoe plate 120. As an example, the midsole can be part of or integrated into an athletic shoe (or any other shoe). The plate imparts functional characteristics to the integrated midsole, such as particular mechanical properties. For example, the plate and the foam body cooperate to define the stiffness of the midsole, with the plate imparting the majority of the stiffness to the midsole. The plate also increases the energy storage and energy release of the shoe. The foam body provides cushioning and comfort to the user, as well as absorbs impact. The midsole's height varies to provide comfort and/or improve the shoe performance during movement. For example, a midsole's height is larger for running shoes than for training shoes.

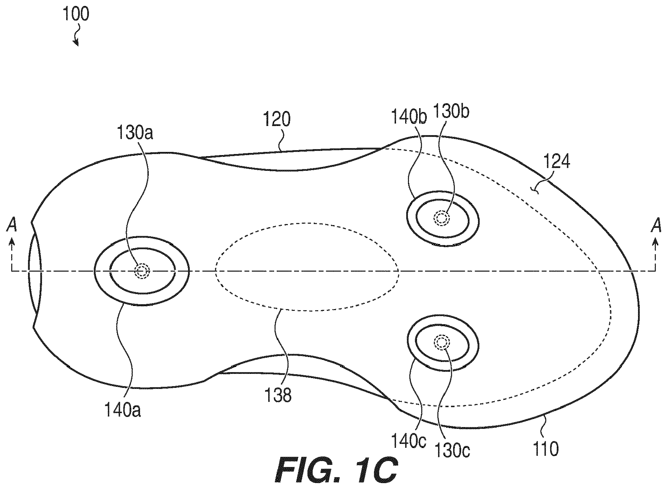

As shown in FIGs. 1A-1D, the foam body 110 includes a top surface 122 and an opposing bottom surface 124. (The bottom surface is labeled but only an edge is visible; this surface is better seen in FIG. 1C.) Each surface is shaped or configured to be coupled to other shoe components, such as an insole, an outsole, a heel counter, and so on. In particular, the top surface 122 is configured to accept an insole of a shoe and defines a set of depressions or openings 130a-c. Some foam bodies 110 may define depressions that do not extend through the body while others define openings that do extend through the body.

In some examples, the plate 120 includes a heel counter (not shown). In this example, the plate and the heel counter are co-molded with the foam body to form the midsole.

The foam body 110 is made from any suitable foam material or combination of materials. For example, the foam body can be formed from polyamides, polyethylene, polypropylene, polyurethane (e.g., thermoplastic polyurethane), ethyl vinyl acetate, and/or polyols. Some foam bodies may include or may be entirely formed from a bio-based foam material, such as sugarcane. Some foam materials used to create the foam body 110 include castor bean oil-based resins, although this is not necessary. By way of example, the percentage of bio-based material in the foam may be at least 20%, at least 30%, at least 50% or any other minimum percentage of bio-based materials. Additionally, some examples of the foam body include recycled materials. As noted above, using bio-based materials has positive environmental benefits, including reduced emissions and ecological sustainability.

The shoe plate 120 can be formed from a polymer composite material, including bio-based polymer composite materials. In some cases, the polymer composite includes a natural fiber reinforcement, such as flax or hemp fibers, provided in a matrix of a polymer material. In some examples, the polymer material includes a bio-based polymer. Certain bio-based polymers are derived from renewable sources such as sugarcane, sugar beets, starch crops, trees, bamboo, and the like.

Polymer composite materials having a matrix of bio-based and/or recycled polymers provide several environmental benefits. For example, the use of renewable sources provides environmental benefits with respect to carbon dioxide (CO₂) capture, which can help reduce harmful greenhouse gas levels. Also, recycled synthetic polymers divert plastic from landfills and oceans and their production is less energy intensive than production of virgin synthetic polymers.

As depicted in FIG. 1A, the midsole 100 includes a side surface 128. As shown, the side surface 128 is located between the top surface 122 and the bottom surface 124. In some geometries, the foam body 110 and the plate 120 collectively define the side surface 128. For example, the foam body 110 defines a curved portion 132 of the side surface 128 and the plate 120 defines a second portion of the side surface 128. In some examples, the plate 120 protrudes from the foam body 110 at the side surface 128. The curved portion 132 delineates the protruding portion of the plate 120 from portion of the plate 120 that the foam body 110 encapsulates.

Similarly, the foam body 110 and the plate 120 collectively define a heel portion 134. The plate 120 protrudes from the foam body 110 at the heel portion 134 and the foam body 110 defines a curved portion that delineates the protruding portion of the plate 120 at the heel portion 134 from the portion of the plate 120 that the foam body 110 encapsulates.

In some embodiments, the contour of the midsole at the top surface 122 defines a gradient between the heel portion 134 and the top portion. This gradient defines the heel drop of the shoe. The heel drop helps with impact of the heel when it hits the ground, thereby shifting the pressure towards the front of the foot.

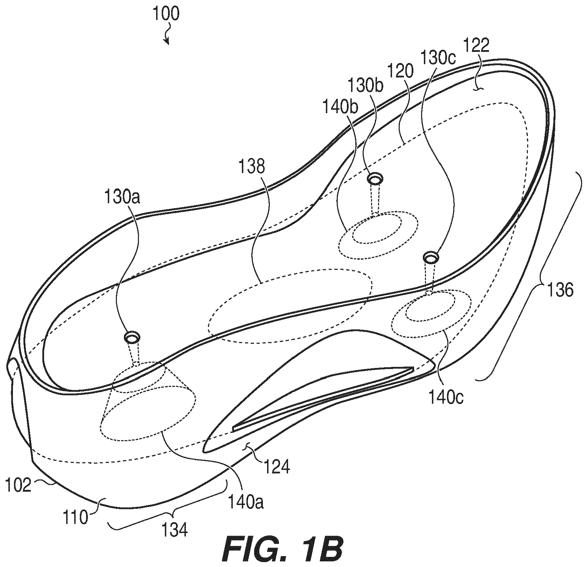

FIG. 1B is similar to FIG. 1A with the co-molded plate and foam body features shown in phantom. As illustrated in the figure, the plate 120 spans from the heel portion 134 to a toe portion 136 and defines a through hole 138 or an aperture. In some examples, the through hole 138 is between the heel portion 134 and the toe portion 136. The through hole 138 may be any suitable dimension as to permit the foam to flow through the hole during the injection process.

As discussed above, the plate 120 imparts stiffness and functions as a spring (e.g., provides energy storage and energy release properties). That said, the plate 120 is also a suitable shape to accommodate the in-situ injection process. In some examples, the midsole 100 includes more than one plate 120 (e.g., two plates or more). In one sample two-plate configuration, each plate runs from the heel portion 134 to the toe portion 136 and defines a gap between both plates where foam flows through to fill the cavity of the mold. In this configuration, the big toe flexes independently from the rest of the toes. This configuration increases the energy return because the big toe drives more force into the ground compared to the rest of the toes. In addition, each plate imparts longitudinal (e.g., front-back) stiffness to the shoe. The split toe configuration can also increase the stability of the shoe because of the independent pressure that the big toe and the rest of the toes apply, respectively.

In another example, the two plates are located in the toe region and in the heel region, respectively. In such a configuration, the toe region flexes independently from the heel region, thus imparting different functional characteristics to the midsole. For example, each of the plates focuses its energy absorption and energy return on its respective region. Each plate can have a different stiffness, thus allowing different levels of support, energy absorption and energy return in different regions of the foot. In this configuration, the plate maintains a lateral stiffness (e.g., left-right) comparable to the lateral stiffness of a single plate. Also, the midsole can bend on itself, facilitating storage and shipping.

As another example, the plate 120 may be a single plate spanning from the toe region to the heel region and defining a narrow waist between the heel portion 134 and the toe portion 136. In this configuration, the narrowed waist of the plate 120 permits the foam to flow from the top mold, around the waist portion of the plate, and to the bottom mold-thus filling the mold cavity and forming the midsole. In this configuration, the waist of the shoe plate 120 imparts longitudinal stiffness (e.g., front-back) to the midsole while allowing more torsion of the midsole compared to the shoe plate 120 configuration shown in the figure. Also, the waist shape configuration imparts a lateral stiffness (e.g., left-right) across the toe region and across the heel region similar to the single toe plate and single heel plate example above.

As shown in FIG. 1B, the foam body 110 defines depressions 130a-c and cavities 140a-c. The top surface 122 defines the opening of the depressions 130a-c. The bottom surface defines the opening of the cavities 140a-c. In some examples, each depression along the top surface 122 aligns with a corresponding cavity along the bottom surface 124. For example, depression 130a is concentric and centered, along a vertical axis, with cavity140a. Similarly, depression 130b is concentric and centered, along a vertical axis, with cavity 140b. Also, depression 130c is concentric and centered, along a vertical axis, with cavity 140c. This alignment helps to securely pin the plate in place during the injection molding process. The resulting cavities visually expose the plate, allowing the wearer to see the composition of the midsole. Also, the cavities in the midsole result in a lighter shoe.

In some embodiments, each depression and each cavity are wider at the opening (e.g., at the top surface and at the bottom surface, respectively) and narrows as it approaches the shoe plate. This rounded shape of the depressions and cavities (corresponding to the shape of flanged supports in the mold cavity) allows the foam to fill the cavity uniformly (e.g., it avoids having sharp edges that may need to be machined at a later time). As a result of the profile, the midsole can be in near-final or final form after the foam solidifies. However, other embodiments include depressions and cavities with a uniform cross-section along the foam body. Any combination of cross-sections and shapes are also possible.

FIG. 1C is a plan view of the midsole 100 along the bottom surface 124. As illustrated in the figure, the bottom surface 124 defines an opening of the cavities 140a, 140b, 140c. Each of the cavities 140a-c has a first end (e.g., the end extending through the bottom surface). The respective first end of the each cavity 140a-c defines the respective opening of each cavity 140a-c at the bottom surface. The cavity also has a second end (e.g., bottom of the cavity) or a termination end at the shoe plate. In some examples, the diameter of the first end of the cavity is larger than the diameter of the second end of the depression.

As shown in the figure, the cavities 140a-140c expose portions of the shoe plate 120. The exposed portions of the shoe plate 120, the cavities 140a-140c, and the bottom surface 124 of the foam body 110 defines a portion of the tread surface of the shoe. In some cases, the cavities 140a-140c are filled. For example, a visually transparent material can be used to visually expose the plate while preventing debris from entering the depression. In other examples, the cavity is filled with an opaque material, a high-friction or "grippy" material (rubber, for example) to increase stability while a user is walking, a foam similar or the same to that used to form the midsole, and so on . While described uniformly, any combination of filled/unfilled cavities is possible.

In some embodiments, an outsole is configured to be coupled to a bottom surface of the midsole 100. Outsoles provide the wearer grip, particularly in wet or slick surfaces. Similar to the midsole 100, the outsole has openings that are configured to be aligned with cavities 140a, 140b, 140c to visually or physically expose the shoe plate 120. In some examples, the outsole may cover the bottom surface of the midsole 100, thereby concealing the cavities 140a, 140b, and 140c and the shoe plate 120.

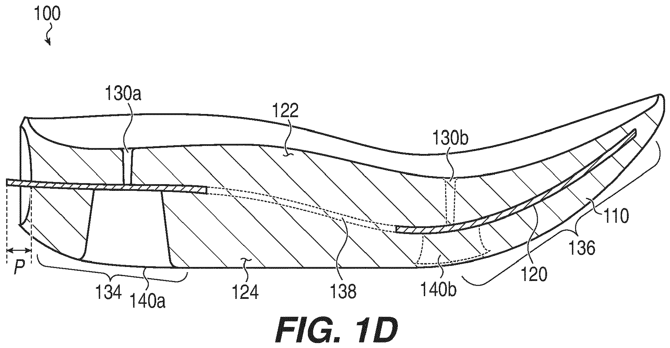

FIG. 1D is a cross-sectional view of the midsole along line A-A of FIG. 1C. As illustrated in the figure, the cavity 140a extends from the bottom surface 124 up to the plate 120. Cavity 140a has a flanged end (e.g., at bottom surface 124) and tapers along its height. In other words, a diameter of the cavity 140a at the shoe plate 120 is smaller than a diameter of the cavity at the bottom surface 124. More generally, the cavity 140a is any suitable diameter that supports the shoe plate during the injection of the foam and allows for easy removal of the mold parts.

As discussed above, the midsole 100 defines a depression 130a extending from the top surface 122 to the shoe plate 120. The depression 130a substantially aligns with the cavity 140a. For example, the bottom of the depression 130a at the shoe plate 120 is opposite the bottom of the cavity 140a at the shoe plate 120. As explained below, during the injection of the foam, flanged supports pin the plate in place. Depression 130a and cavity 140a are formed as a result of the flanged support placement within the mold. For example, the foam wraps around the flanged supports, thereby defining depressions and cavities in the solidified foam body 110. The diameter of cavity 140a is larger than the diameter of depression 130a. In some examples, the diameter of cavity 140a is significantly larger than the diameter of depression 130a. Depending on the diameter of each of the flanged supports, each of the cavities and each of the depressions may expose or occlude the shoe plate. For example, when a cavity (e.g., cavity 140a) has a wide diameter, the cavity visually exposes the shoe plate 120 at the bottom surface 124. In some embodiments, depression 130a may visually occlude the shoe plate due to its narrow diameter.

The midsole 100 includes more than one cavity 140a, 140b at the bottom surface 124 and more than one depression 130a, 130b at the top surface 122. For example, cavity 140b and depression 130b are positioned around a toe region of the midsole. The locations of the depressions and the cavities shown in FIG. 1D should not be construed as limiting. As explained above, the depressions and the cavities mirror the flanged support locations of the mold. Thus, in some examples, flanged supports and corresponding cavities are in the middle of the sole (e.g., around the arch area).

The size and number of cavities can reduce or increase the overall weight of the shoe. For example, larger cavities result in less material in the midsole and thus a more lightweight shoe. By contrast, smaller cavities result in a midsole with more material and weight, which may provide additional cushioning and/or support to the shoe. In some cases, smaller depressions at the top surface are more comfortable for the wearer due to a more uniform top surface. By contrast, the size and shape of the cavities at the bottom surface may be more varied as this surface does not interface with the wearer's foot.

The midsole 100 acts as a toe spring. For example, the midsole curves upward at the toe region. This curve is configured to help a wearer roll their foot forward during the stance phase of gait. The plate 120 may be any suitable shape. For example, the shoe plate may have a uniform thickness or it may have variable thickness, which will change the functional characteristics of the midsole. For instance, a uniform thickness imparts uniform lateral stiffness to the heel region and to the toe region. Variable thicknesses of the shoe plate, by contrast, imparts different levels of stiffness to different parts of the midsole. As such, the midsole may be more flexible in regions having thinner portions of the shoe plate and stiffer in regions having thicker portions of the shoe plate.

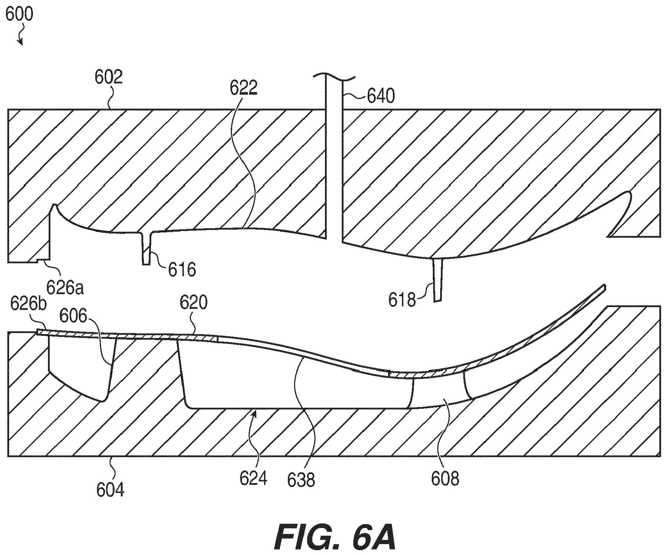

The shoe plate includes a through hole 138. As depicted in FIG. 1D, the through hole 138 is between the heel portion 134 and the toe portion 136 of the sole. The through hole 138 or opening encircles a portion of the foam body 110. During the injection process (e.g., FIGS. 6A-6C), the foam is injected from a top mold, flows through the through hole 138, and to the bottom mold, thereby filling the mold. As a result, in some examples, the foam body 110 is a monolithic and/or unitary piece that at least partially encloses the shoe plate 120. The through hole 138 changes the functional characteristics of the midsole compared to a traditional multicomponent midsole. For example, the through hole 138 decreases the overall stiffness of the shoe plate 120. In some plate designs, as a result of the through hole 138, the lateral stiffness of the plate at the arch area decreases and the longitudinal stiffness (e.g., due to less material) also decreases. The round or elliptical shape of the through hole 138 concentrates stresses around the edges of the hole. Thus, stresses can be evenly distributed around the through hole 138. Also, a round configuration prevents sharp stress concentrations that can lead to brittleness and/or breakage of the shoe plate.

In some embodiments, the plate 120 protrudes a distance P from a curved portion at the back side of the foam body 110. During the injection process, as described in FIGS. 6A-6C below, a mold may clamp to a portion of the shoe plate 120 at the back side. After solidifying the foam, the clamped portion of the shoe plate 120 defines the protruded portion of the shoe plate 120. In some examples, the mold does not clamp on to the shoe, thus resulting in the shoe plate 120 not protruding from the foam body 110. As another example, protruding portions of the shoe plate may be removed from the midsole after the injection molding process.

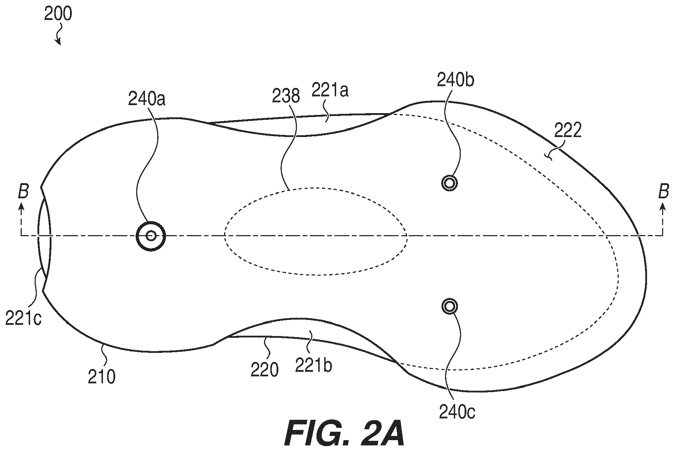

FIGS. 2A-2B illustrate an example of a midsole where a cushioned body 210 of the midsole 200 is molded around a support plate 220. This embodiment has similar features to those described in FIGS. 1A-1D except the cavities have a different shape and/or different dimensions. In particular, FIG. 2A is a plan view showing the bottom surface 224 with openings of the cavities 240a-c. Cavities 240a-c are narrower than cavities 140a-c in FIGS. 1A-1D. The narrower dimensions of cavities 240a-c can occlude from view the shoe plate 220. Due to the shape of the cavities 240a-c, the bottom surface 224 is generally uniform. As such, an outsole can be attached without filling the depression and/or without cutouts for those depressions. The narrow cavities 240a-c provide additional protection to the shoe plate against wear and/or environmental exposure. Narrower cavities 240a-c also have more surface area with respect to the ground, thus providing more grip to the wearer, than cavities 140a-c in FIGS. 1A-1D above.

As a result of the narrower cavities 240a-c, the plate 220 is visually exposed primarily at peripheral portions of the cushioned body 210. For example, the portion of the plate 221b (e.g., around the arch area of the sole) is exposed at a portion of the side surface of the midsole. Similarly, the portion of the plate 221a (e.g., around the area opposite of the arch of the midsole) is exposed at another portion of the side surface of the midsole. Moreover, the portion of the plate 221c (e.g., around the back side of the midsole) is exposed at a different portion of the side surface of the midsole. In some examples, the exposure occurs as a result of the clamping of the mold at those locations as explained in FIG. 6A-6C below. Each respective portion of the plate 221a, 221b, and 221c provide the sole with additional longitudinal stiffness.

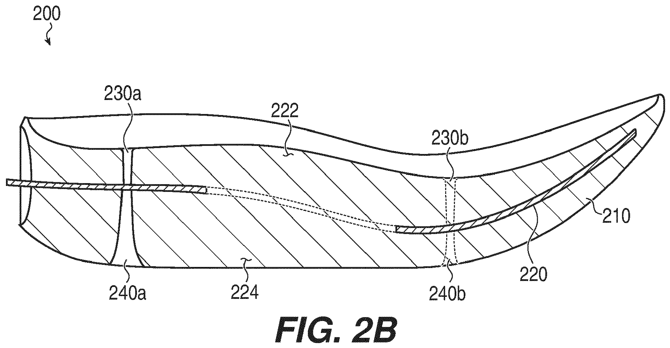

FIG. 2B shows a cross-section of a midsole 200 taken along line B-B of FIG. 2A. In this configuration, the cavities (e.g., cavity 240a) have similar diameters to the corresponding depression (e.g., depression 230a) at the second end of each corresponding cavity (e.g., end adjacent to the plate). Similar to the cross-section described in FIG. 1D above, a cavity 240a extends from the bottom surface 224 up to the plate 220 and is flanged at its first end (e.g., at bottom surface 224).

In this example, cavities 240a-c mirror depressions 230a-c. Depression 230a extends from the top surface 222 to the shoe plate 220 and substantially aligns with cavity 240a. For example, the bottom of the depression 230a at the shoe plate 220 is opposite the bottom of the cavity 240a at the shoe plate 220. As explained below, during the injection of the foam, flanged supports pin the plate in place. Depression 230a and cavity 240a are formed as a result of the flanged support placement. For example, the foam may encircle the flanged supports thereby defining each depression and cavity in the cushioned body 210. As a result of the geometry of the flanged supports, midsole 200 is heavier and/or has more material than midsole 100.

In some examples, the depressions are used as additional anchoring features. For example, depressions 230a, 230b, and 230c at the top surface are used as an insertion point for pins in an insole, thereby securely coupling the insole to the midsole 200.

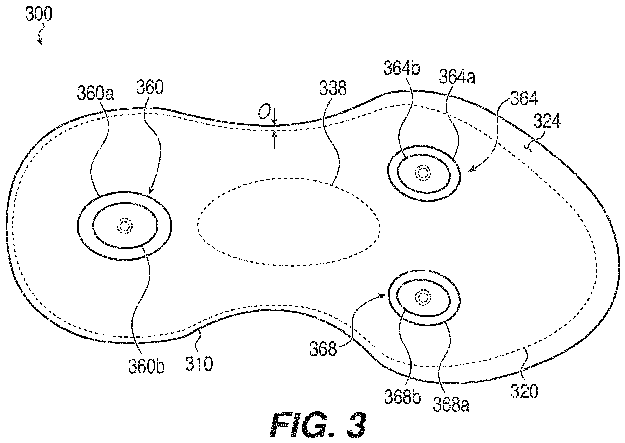

FIG. 3 is a plan view of yet another sample midsole viewed from the bottom surface of the midsole. Similar to midsole 100 (FIG. 1A), the midsole 300 may include a foam body 310 and a shoe plate 320. In some examples, the shoe plate 320 is encased in the foam body 310.

In this configuration, the foam body 310 defines a surface of the midsole and the shoe plate 320 does not protrude from the foam body. The shoe plate 320 is encased in the foam body 310 which protects the shoe plate 320 from impact or breakage of the plate. The shoe plate defines an offset O between the periphery of the sole (e.g., the periphery of the foam body 310) and the periphery of the shoe plate 320. In some examples, the offset O is sufficiently large to permit the flow of the foam around the shoe plate during the injection process. In some examples, the offset O is small enough as to barely cover the plate 320 in the arch area.

Shoe plate 320 is less stiff in a longitudinal and in a lateral direction from shoes plates 120 and 220. For example, since shoe plate 320 does not have protruding material beyond the cushioned body, the lateral stiffness of the shoe plate 320 at the arch portion decreases. The rounded portions of the shoe plate 320 (e.g. that defines the offset O) provide a more even stress distribution and can increase the flexibility of the midsole. The configuration of shoe plate 320 protects against accidental impacts and/or breakage of the shoe plate during wear because the foam body 310 protects the shoe plate 320.

Similar to the embodiments described in FIGS. 1A-1D above, the shoe plate 320 has a through hole 338. The through hole 338 is configured to allow a foam to flow through the through hole 338 during the forming process. The foam also flows around the plate (e.g., toe portion, arch area, and so on) to form the midsole 300.

The foam body 310 and the shoe plate 320 collectively define a bottom surface 324 of the sole. For example, the foam body 310 defines a first cavity 360. The cavity 360 has a first end 360a and a second end 360b extending from the bottom surface to the plate, respectively. The second end 360b of the cavity 360 is at the interface between the plate and the foam body. Cavity 360 exposes the plate 320 at the bottom surface 324. Similarly, cavities 364, 368 have a first end 364a, 368a and a second end 364b, 368b. The bottom surface 324 defines the first ends 364a, 368a of the cavities 364, 368 which extend from the bottom surface to the plate. The second ends 364b, 368b of the cavities 364, 368 is at the interface between the plate and the foam body. Cavities 364, 368 expose the plate 320 at the bottom surface 324. As depicted, each cavity 360, 364, 368 has the same dimensions or different dimensions, according to the position of the cavities along the bottom surface 324, the shape of the plate 320, the exposure of the plate to the elements, and so on.

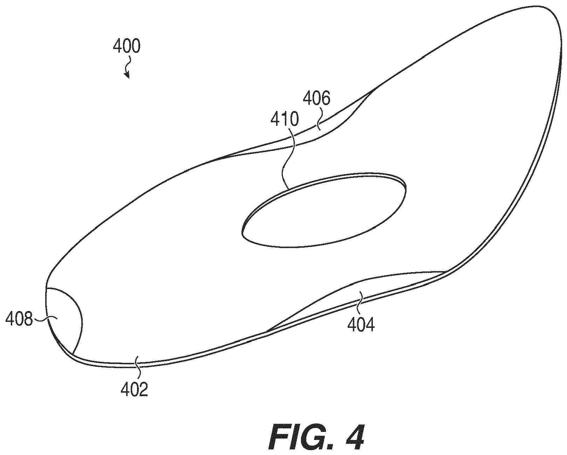

FIG. 4 shows the shoe plate used in FIG. 1A-1D and/or in FIG. 2A-2B. As discussed above, the shoe plate 400 is a stiffener of the midsole and provides stability, pressure distribution, energy storage and energy release, support, comfort, and so on. The stiffness and the energy storage and energy release of a shoe plate is a function of its shape, materials, thickness, and so on.

The shoe plate 400 is made from any suitable material or combination of materials. For example, the shoe plate 400 can be formed from a polymer composite material. The polymer composite material can be a bio-based polymer composite material. In some cases, the polymer composite comprises a natural fiber reinforcement, such as flax or hemp fibers, provided in a matrix of a polymer material. In some examples, the polymer material includes a bio-based polymer. Bio-based polymers are derived from renewable sources such as sugarcane, sugar beets, starch crops, trees, bamboo, and the like. In additional examples, the polymer material includes a recycled polymer. Polymer composite materials having a matrix of bio-based and/or recycled polymers can provide several environmental benefits.

In some examples, the shoe plate 400 is made from more than one material. For example, regions 404, 406, and 408 can be made from a different material from region 402. Regions 404, 406, 408 can be sacrificial. For example, after solidifying the foam portion of the sole, the lip or protruding end of the shoe plate (see, e.g., FIG. 1A), is removed such that the thickness of the plate is flush with the foam body. In other examples, the shoe plate 400 is made from a single, unitary material. Regions 404, 406, and 408 are removed (e.g., machined) after solidification of the foam. Alternatively, regions 404, 406, and 408 are not removed in some embodiments, such as the shoe plate as shown with respect to FIGs. 1A-C. The shoe plate 400 has sufficient elasticity as to prevent breakage under conventional impact or loading at these regions 404, 406, 408.

The shoe plate 400 defines a through hole 410. During manufacturing of the midsole, the foam flows from a top mold, through the through hole 410, and to the bottom mold cavity. In some examples, the shoe plate 400 has more than one through hole. For example, the shoe plate can include a through hole in the toe portion, the heel portion, and/or in the middle of the midsole.

In some embodiments, the midsole of the shoe may have more than one shoe plate, as described above. For example, one shoe plate extends along one side of the midsole (e.g., a left side) from the toe portion to the heel portion. A second shoe plate extends on an opposite side (e.g., a right side) of the midsole, extending from the toe portion to the heel portion. In this configuration, each shoe plate may define a gap sufficient to allow foam to flow to the bottom portion of a mold during manufacturing. In other embodiments a shoe plate extends from the heel to the arch. In other examples, a shoe plate extends from the toe region to the arch.

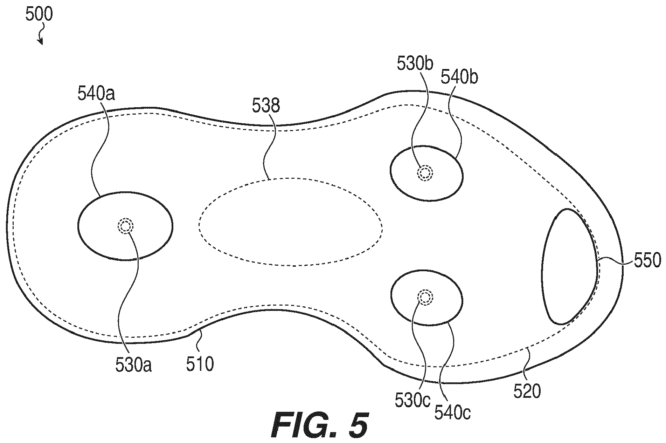

FIG. 5 shows a plan view of a midsole viewed from the bottom surface of the midsole. The bottom surface of FIG. 5 includes opening of cavities similar to those presented in FIG. 1A-1D, for example, and additional cavities, such as cavity 550. In some examples, the additional cavity 550 is not formed from the flanged supports in the bottom mold and does not have an opposing depression in the midsole.

As explained above, each cavity 540a, 540b, 540c has a corresponding feature 530a, 530b, 530c along the top surface. In some configurations, each pair of features 540a and 530a, 540b and 530b, 540c and 530c are concentrically and/or centrally aligned along a vertical axis of the sole. The additional cavity 550 does not have a corresponding depression along the top surface. Additional cavity 550 can be formed through flanged supports in the bottom mold. In some examples, the additional cavity 550 is formed as a result of the manufacturing process (e.g., the flow of the filler within the mold cavity during injection).

The combined bottom surface cavities 540a, 540b, 540c, and the additional cavity 550 define a portion of the tread of a shoe. In some examples, the cavities are used to securely attach shoe accessories to the shoe. For example, the cavities are used as additional tie points for slip shoe covers, snow grippers, or other traction accessories. As discussed above, some depressions are filled. The filling material can be visually transparent. In other examples, a wearer can choose to customize the fill color and/or pattern. In other examples, the depressions are filled with LED lights. In some examples, the additional depression 550 may define alternative shapes or logos.

Similar to examples described above (see, e.g., FIG. 3), a midsole 500 includes a cushioned body 510 and a plate 520. The bottom surface defines cavities 540a, 540b, 540c. These cavities span from the bottom surface to the plate, thereby exposing a portion of the plate. The plate 520 defines a portion of the bottom surface of the sole.

FIG. 6A-6C illustrates an example method 600 of manufacturing a midsole with a co-molded shoe plate. The midsole in this example is formed by injection molding. The mold has the general shape and size of the part to be formed. The mold shown has two parts, a top mold 602 and a bottom mold 604.

The bottom mold 604 includes bottom flanged supports 606 and 608. Each bottom flanged support protrudes from the bottom mold surface 624 up to a height suitable to support a shoe plate 620. For example, bottom flanged support 606 supports the heel portion of the shoe plate 620 while bottom flanged support 608 supports the toe portion of the shoe plate 620. The flanged supports have a generally round shape. In some examples, the flanged supports are wider at the base of the mold (e.g., a bottom surface 628) and taper at the top of the support.

The top mold 602 may also include flanged supports 616 and 618. Similar to the bottom flanged supports, the top flanged supports protrude from the top mold surface 622 up to a height suitable to support the top portion of the shoe plate 620. As an example, flanged support 616 supports a heel portion of the shoe plate 620 and flanged support 618 supports a top portion of the shoe plate 620. The top mold part 602 includes an inlet 640 configured to inject the molten resin from the injection machine nozzle.

The bottom flanged supports 606 and 608 are larger than the corresponding top flanged supports 616 and 618. For example, the bottom flanged supports have a larger width at the base than the width at the base of the top flanged supports. In some examples, the width of each flanged support is similar, the top flanged supports are larger than the bottom flanged supports, and so on. In some embodiments, the bottom flanged support 606 defines a volume and the top flanged support 616 defines another volume. The volume of the first flanged support is larger than the volume of the second flanged support, for example. In other examples, the mold parts do not have flanged supports. In such examples, the shoe plate may be fixed during the injection process on the outside of the plate (e.g. notches in the mold that clamp to portions of the plate).

The mold parts 602 and 604 define notches 626a and 626b. These notches 626a and 626b support the shoe plate 620 at its periphery. For example, the back portion and the arch portions of the shoe plate (see, e.g., regions 404, 406, and 408 in FIG. 4) are clamped within these notches. In some examples, the mold supports the shoe plate 620 using both flanged supports and notches. Other support mechanisms are possible.

As shown in FIG. 6A, the shoe plate 620 is placed on a bottom mold. The one or more flanged supports 606 and 608 supports the shoe plate 620 when the shoe plate is inside the mold. As explained above, the shoe plate 620 includes an aperture 638. This aperture is free of obstructions when the shoe plate is inside the mold.

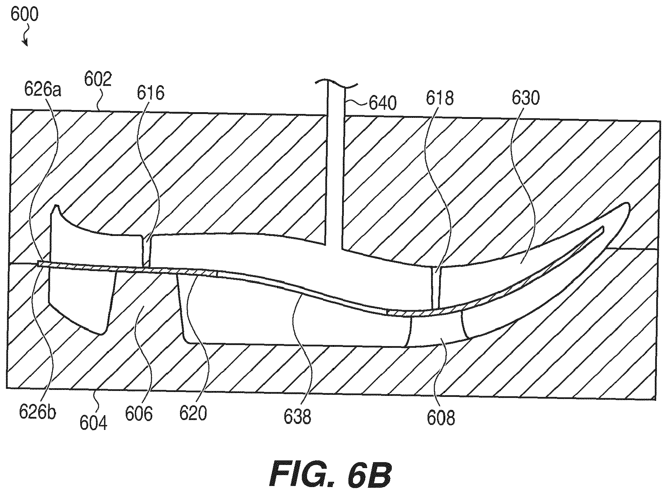

Once the shoe plate 620 is inside the mold, the top mold 602 and the bottom mold 604 are aligned and closed, as illustrated in FIG. 6B. The mated mold parts define a mold cavity 630. In a closed configuration, the top mold part is opposite the second mold part. Once closed, each flanged support contacts the shoe plate to fix it in place. For example, flanged support 606 prevents the plate from sinking within the mold while flanged support 616 prevents the plate from moving upwards within the mold. The notches 626a and 626b clamp a portion of the periphery of the shoe plate to prevent movement during the injection process.

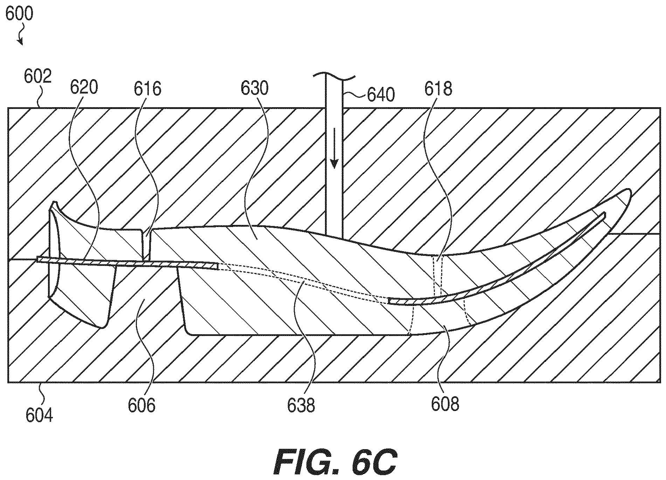

As illustrated in FIG. 6C, a filler is injected at the inlet 640. During the process, the filler flows through the inlet 640, into the cavity 630, through the aperture 638 and surrounds the plate 620. The filler material is any suitable foam material or combinations of materials. For example, the foam can be any one of or combination of materials, including polyamides, polyethylene, polypropylene, polyurethane (e.g., thermoplastic polyurethane), ethyl vinyl acetate, and polyols. Some foam materials include bio-based materials (e.g., sugar cane). For example, the foam material may include castor bean oil-based resins. During the injection molding process, the molten resin is injected with a physical (e.g., nitrogen gas, CO₂) or a chemical blowing agent, as may be known to those skilled in the art.

After solidification of the foam, the protruding portions of the shoe plate (e.g., those clamped by notches 626a and 626b) can be removed using any suitable method (e.g., machining). Also, as explained above, the depressions resulting from the flanged supports can be covered and/or filled. Other embodiments or combinations are possible.

As used herein, the phrase "at least one of' preceding a series of items, with the term "and" or "or" to separate any of the items, modifies the list as a whole, rather than each member of the list. The phrase "at least one of' does not require selection of at least one of each item listed; rather, the phrase allows a meaning that includes at a minimum one of any of the items, and/or at a minimum one of any combination of the items, and/or at a minimum one of each of the items. By way of example, the phrases "at least one of A, B, and C" or "at least one of A, B, or C" each refer to only A, only B, or only C; any combination of A, B, and C; and/or one or more of each of A, B, and C. Similarly, it may be appreciated that an order of elements presented for a conjunctive or disjunctive list provided herein should not be construed as limiting the disclosure to only that order provided.

One may appreciate that although many embodiments are disclosed above, that the operations and steps presented with respect to methods and techniques described herein are meant as exemplary and accordingly are not exhaustive. One may further appreciate that alternate step order or fewer or additional operations may be required for particular embodiments.

Although the disclosure above is described in terms of various exemplary embodiments and implementations, it should be understood that the various features, aspects and functionality described in one or more of the individual embodiments are not limited in their applicability to the particular embodiment with which they are described, but instead can be applied, alone or in various combinations, to one or more of the some embodiments of the invention, whether or not such embodiments are described and whether or not such features are presented as being a part of a described embodiment. Thus, the breadth and scope of the present invention should not be limited by any of the above-described exemplary embodiments but is instead defined by the claims herein presented.

### ADDITIONAL NUMBERED STATEMENTS

1. A sole comprising:
   a plate; and
   a foam body defining:
      a bottom surface;
      a top surface opposite the bottom surface;
      a first cavity wherein:
         the bottom surface defines a first end of the first cavity; and
         the plate defines a second end of the first cavity; and
      a depression wherein:
         the top surface defines a first end of the depression; and
         the plate defines a second end of the depression; and
   wherein:
      the plate is made from a first material; and
      the foam body is made from a second material.
2. The sole of statement 1, wherein:
   the plate defines a through hole; and
   the through hole encircles a portion of the foam body between the top surface and the bottom surface.
3. The sole of statement 2, wherein:
   the sole defines a side surface between the top surface and the bottom surface;
   the foam body defines a first portion of the side surface; and
   the plate protrudes from the first portion of the side surface and defines a second portion of the side surface.
4. The sole of statement 1, wherein the plate is a first plate and the cavity is a first cavity, the sole comprising:
   a second plate; and
   the sole defining:
      a second cavity wherein:
      the bottom surface defines a first end of the second cavity; and
      the second plate defines a second end of the second cavity.
5. The sole of statement 1, wherein the first material is flax composite.
6. The sole of statement 1, wherein the second material is a bio-based foam.
7. The sole of statement 1, wherein:
   the bottom surface of the foam body, the first cavity, and a portion of the plate exposed by the cavity defines a tread surface of the sole.
8. A method for fabricating a shoe, the method comprising:
   placing, on a first part of a mold, a shoe plate defining an aperture, the first part of the mold defining a first flanged support configured to support a first portion of the shoe plate;
   aligning the first part of the mold with a second part of the mold, the second part of the mold defining a second flanged support configured to support a second portion of the shoe plate and the first part of the mold and the second part of the mold defining a mold cavity;
   closing the mold such that the first flanged support of the first part of the mold is opposite the second flanged support of the second part of the mold, the first flanged support and the second flanged support are configured to fix the shoe plate within the mold cavity; and
   injecting, at the second half of the mold, a foam, wherein the foam flows though the aperture thereby surrounding the plate and filling the aperture.
9. The method of statement 8, comprising:
   clamping, between the first part of the mold and the second part of the mold, a peripheral portion of the shoe plate.
10. The method of statement 9, comprising:
   removing, from a solidified sole, the peripheral portion of the shoe plate.
11. The method of statement 8, comprising:
   attaching, at a bottom surface of a solidified foam, an outer sole.
12. The method of statement 8, wherein:
   the first flanged support has a first volume; and
   the second flanged support has a second volume smaller than the first volume.
13. A shoe comprising:
   an upper;
   an outer sole; and
   a sole defining a side surface and a bottom surface, the sole comprising:
      a shoe plate defining a lip, the lip defining a first portion of the side surface; and
      a monolithic cushioned body at least partially enclosing the shoe plate and defining a second portion of the side surface, the cushioned body exposing, at the bottom surface, at least of portion of the shoe plate.
14. The shoe of statement 13, wherein:
   the cushioned body defines a cavity, the bottom surface defines an opening of the cavity and the shoe plate defines a bottom of the cavity.
15. The shoe of statement 14, wherein:
   the cavity defines a portion of a tread of the shoe.
16. The shoe of statement 15, wherein:
   the cushioned body defines a depression, a top surface defines an opening of the depression and the shoe plate defines a bottom of the depression.
17. The shoe of statement 16 wherein the bottom of the cavity is opposite of the bottom of the depression.
18. The shoe of statement 13 wherein:
   the shoe plate defines a hole, the hole is configured to accept a portion to the monolithic cushioned body.
19. The shoe of statement 13, wherein:
   the shoe plate comprises a first material and a second material different from the first material, the lip of the shoe plate is made from the second material.
20. The shoe of statement 13, wherein the monolithic cushioned body is made from a bio-based foam.

## Claims

1. A sole comprising:
a plate; and
a foam body defining:
a bottom surface;
a top surface opposite the bottom surface;
a first cavity wherein:
the bottom surface defines a first end of the first cavity; and
the plate defines a second end of the first cavity; and
a depression wherein:
the top surface defines a first end of the depression; and
the plate defines a second end of the depression; and
wherein:
the plate is made from a first material; and
the foam body is made from a second material.

2. The sole of claim 1, wherein:
the plate defines a through hole; and
the through hole encircles a portion of the foam body between the top surface and the bottom surface.

3. The sole of claim 1 or claim 2, wherein:
the sole defines a side surface between the top surface and the bottom surface;
the foam body defines a first portion of the side surface; and
the plate protrudes from the first portion of the side surface and defines a second portion of the side surface.

4. The sole of any preceding claim, wherein the plate is a first plate, the sole comprising:
a second plate; and
the sole defining:
a second cavity wherein:
the bottom surface defines a first end of the second cavity; and
the second plate defines a second end of the second cavity.

5. The sole of any preceding claim, wherein the first material is flax composite.

6. The sole of any preceding claim, wherein the second material is a bio-based foam.

7. The sole of any preceding claim, wherein:
the bottom surface of the foam body, the first cavity, and a portion of the plate exposed by the first cavity defines a tread surface of the sole.

8. The sole of any preceding claim, wherein the foam is a monolithic piece.

9. The sole of any preceding claim, wherein: the plate comprises:
a lip made from a third material that is different from the first material; and
a portion of the plate other than the lip is made from the first material.

10. The sole of any preceding claim, wherein the second end of the cavity is opposite the second end of the depression.

11. A method for fabricating a shoe, the method comprising:
placing, on a first part of a mold, a shoe plate defining an aperture, the first part of the mold defining a first flanged support configured to support a first portion of the shoe plate;
aligning the first part of the mold with a second part of the mold, the second part of the mold defining a second flanged support configured to support a second portion of the shoe plate and the first part of the mold and the second part of the mold defining a mold cavity;
closing the mold such that the first flanged support of the first part of the mold is opposite the second flanged support of the second part of the mold, the first flanged support and the second flanged support configured to fix the shoe plate within the mold cavity; and
injecting, at the second part of the mold, a foam, wherein the foam flows though the aperture thereby surrounding the shoe plate and filling the aperture.

12. The method of claim 11, comprising:
clamping, between the first part of the mold and the second part of the mold, a peripheral portion of the shoe plate.

13. The method of claim 12, comprising:
removing, from a solidified sole, the peripheral portion of the shoe plate.

14. The method of any of claims 11 to 13, comprising:
attaching, at a bottom surface of a solidified foam, an outer sole.

15. The method of any of claims 11 to 14, wherein:
the first flanged support has a first volume; and
the second flanged support has a second volume smaller than the first volume.
